# EUROPEAN PATENT APPLICATION

(11) **EP 4 657 046 A1**
(43) Date of publication of application: **03.12.2025**
(21) Application number: 24747289.7
(22) Date of filing: 23.01.2024
(51) Int. Cl.: G01N 21/88, G01N 21/95

(54) **SURFACE DEFECT INSPECTION METHOD, METHOD FOR PRODUCING CERAMIC BALLS, AND SURFACE DEFECT INSPECTION DEVICE**

(30) Priority: 24.01.2023 JP 2023008427
(71) Applicant: Kabushiki Kaisha Toshiba, Tokyo 105-0023 (JP); Toshiba Materials Co., Ltd., Isogo-Ku Yokohama-Shi Kanagawa 235-0032 (JP)
(72) Inventor: SANO, Shoya, Yokohama-shi, Kanagawa 235-0032 (JP); YAMADA, Akihiro, Yokohama-shi, Kanagawa 235-0032 (JP); AKIMOTO, Toshiya, Yokohama-shi, Kanagawa 235-0032 (JP)
(74) Representative: Hoffmann Eitle
(86) International application number: PCT/JP2024/001807
(87) International publication number: WO 2024/157962

(57) **Abstract**

A surface defect inspection method for a ceramic sintered body including a spherical surface portion according to an embodiment includes: an arrangement step; a photographing control step; and a detection step. The arrangement step arranges the ceramic sintered body on an arrangement member having a plurality of spherical members. The photographing control step rotates the ceramic sintered body arranged on the arrangement member in response to rotation of the plurality of spherical members, photographs the ceramic sintered body, which is arranged on the arrangement member, from a plurality of directions, and acquires a plurality of images. The detection step detects a surface defect of the ceramic sintered body based on the plurality of images.

## Description

### TECHNICAL FIELD

An embodiment described later relates to a surface defect inspection method, a method of manufacturing a ceramic ball, and a surface defect inspection device.

### BACKGROUND ART

Ceramic balls have been used in bearing balls. For a ceramic ball, a ceramic sintered body such as a silicon nitride sintered body, an aluminum oxide sintered body, or a zirconium oxide sintered body is used. For the ceramic sintered body used for the ceramic ball, metal die molding or rolling granulation is used.

In the metal die molding, a metal die is used whose internal surface has a spherical surface shape (hemispherical shape). By performing a press with upper and lower metal dies, a ceramic molded body is obtained which has a band-shaped portion around a spherical surface portion. Meanwhile, the rolling granulation is a method for obtaining a large spherical ceramic molded body while rolling a spherical ceramic molded body serving as a core. By sintering the ceramic molded body, the ceramic sintered body is obtained. For example, Japanese Patent Laid-Open No. 2001-163673 (Patent Document 1) discloses a ceramic sintered body which has a band-shaped portion around a spherical surface portion. A ceramic sintered body having a band-shaped portion around a spherical surface portion might be referred to as a raw ball. By performing a polishing process for this raw ball, the ceramic ball is obtained.

When a defect is present on a surface of the ceramic sintered body (raw ball) having the band-shaped portion around the spherical surface portion, polishing efficiency lowers. A surface defect can cause a crack or a chip. Further, when a defect is present on a surface of the ceramic ball, the defect can cause lowering of wear resistance. The defect on the surface of the ceramic sintered body may be a recess portion, a protrusion portion, color unevenness, or the like. Thus, a surface defect inspection of the ceramic sintered body is performed. In related art, an inspection by visual observation by a person has been performed, but human errors have not been eliminated, and a yield rate has been influenced. Thus, inspection methods using inspection devices have been attempted.

For example, in Japanese Patent Laid-Open No. 3-194453 (Patent Document 2), an inspection about a defect is performed by using a contrast pattern of reflected light. Further, in Japanese Patent Laid-Open No. 2008-51619 (Patent Document 3), an image is photographed in oil. In Patent Document 3, measurement is performed in oil, and an influence of an adhered substance can thereby be eliminated.

### PRIOR ART DOCUMENTS

### PATENT DOCUMENT

Patent Document 1: Japanese Patent Laid-Open No. 2001-163673
Patent Document 2: Japanese Patent Laid-Open No. 3-194453
Patent Document 3: Japanese Patent Laid-Open No. 2008-51619

### SUMMARY OF THE INVENTION

### PROBLEMS TO BE SOLVED BY THE INVENTION

In a method using reflected light as in Patent Document 2, for a ceramic sintered body having a band-shaped portion around a spherical surface portion, an accurate inspection has not been able to be performed because the band-shaped portion casts a shadow. Further, when a ball size changes, contrast of the reflected light changes. Thus, inspection precision lowers in a case where the ball size changes. Further, by using an image as in Patent Document 3, the inspection precision can be maintained even when the ball size changes. However, in measurement in oil, it is difficult to stabilize image quality due to a fluctuation of oil. In particular, when a ball is rotated to inspect the whole ball, the fluctuation of oil is likely to occur.

A surface defect inspection method according to an embodiment is to provide a method in which inspection precision about a ceramic sintered body having a spherical surface portion is improved.

### MEANS FOR SOLVING THE PROBLEMS

A surface defect inspection method for a ceramic sintered body including a spherical surface portion according to an embodiment includes: an arrangement step; a photographing control step; and a detection step. The arrangement step arranges the ceramic sintered body on an arrangement member having a plurality of spherical members. The photographing control step rotates the ceramic sintered body arranged on the arrangement member in response to rotation of the plurality of spherical members, photographs the ceramic sintered body, which is arranged on the arrangement member, from a plurality of directions, and acquires a plurality of images. The detection step detects a surface defect of the ceramic sintered body based on the plurality of images.

### BRIEF DESCRIPTION OF THE DRAWINGS

FIG. 1 is a side view illustrating a configuration example for explaining a surface defect inspection method according to an embodiment.
FIG. 2 is a perspective outline view illustrating an example of a mechanism which rotates a ceramic sintered body in the surface defect inspection method according to the embodiment.
FIG. 3 is a side view illustrating examples of photographing directions of the ceramic sintered body in the surface defect inspection method according to the embodiment.
FIG. 4 is a diagram showing an example of a connected image formed with a plurality of images in the surface defect inspection method according to the embodiment.
FIG. 5 is a block diagram illustrating a configuration example of a surface defect inspection device according to the embodiment.

### DESCRIPTION OF EMBODIMENTS

An embodiment of a surface defect inspection method, a method of manufacturing a ceramic ball, and a surface defect inspection device will hereinafter be described in detail with reference to the drawings.

A surface defect inspection method for a ceramic sintered body including a spherical surface portion according to an embodiment includes: an arrangement step; a photographing control step; and a detection step. The arrangement step arranges the ceramic sintered body on an arrangement member having a plurality of spherical members. The photographing control step rotates the ceramic sintered body arranged on the arrangement member in response to rotation of the plurality of spherical members, photographs the ceramic sintered body, which is arranged on the arrangement member, from a plurality of directions, and acquires a plurality of images. The detection step detects a surface defect of the ceramic sintered body based on the plurality of images.

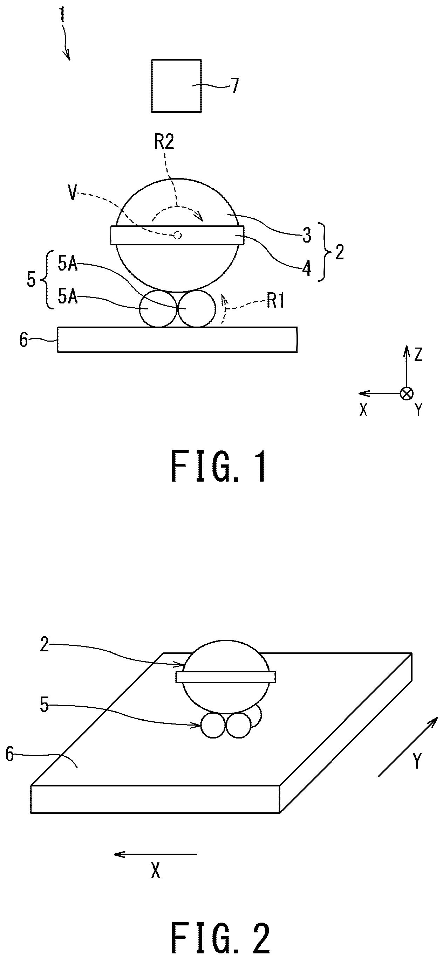

FIG. 1 illustrates an example of a surface defect inspection method according to the embodiment. In FIG. 1, a reference numeral 1 denotes the surface defect inspection device, a reference numeral 2 denotes a ceramic sintered body including a spherical surface portion, a reference numeral 3 denotes a spherical surface portion, a reference numeral 4 denotes a band-shaped portion, a reference numeral 5 denotes a spherical body portion of an arrangement member, a reference numeral 6 denotes a table, and a reference numeral 7 denotes a photographing unit. Note that horizontal components in which a table 6 is slidable are set as an X-axis direction and a Y-axis direction, and a vertical component is set as a Z-axis direction. The X-axis direction, the Y-axis direction, and the Z-axis direction are orthogonal to each other.

The surface defect inspection method according to the embodiment is a surface defect inspection method for a ceramic sintered body 2 including a spherical surface portion 3. The ceramic sintered body 2 has the spherical surface portion 3. The ceramic sintered body 2 including the spherical surface portion 3 may include a band-shaped portion 4 in a circumferential direction of the spherical surface portion 3.

The ceramic sintered body 2 including the spherical surface portion 3 represents a ceramic sintered body for which a finishing process has not yet been applied or a ceramic sintered body for which the finishing process has already been applied.

The finishing process is a polishing process for use for a bearing ball or the like. A surface roughness of the bearing ball is defined in ASTM F2094. Grade-based employment according to ASTM F2094 is performed for the bearing ball in accordance with the purpose of use. The bearing ball is polished to an arithmetic surface roughness Ra according to its grade. When the grade becomes high, there are cases where a mirror finishing process with an arithmetic surface roughness Ra of 0.01 µm or lower is applied.

Further, the ceramic sintered body 2 for which the finishing process has not yet been applied might be referred to as a raw ball. In a case where the ceramic sintered body 2 is represented as the raw ball, it indicates that the finishing process has not yet been performed for the ceramic sintered body 2 including the spherical surface portion 3. Further, the raw ball can include the band-shaped portion 4. The ceramic sintered body 2 including the band-shaped portion 4 is produced in a case where a ceramic molded body is fabricated using metal die molding and where sufficient polishing is not applied to the ceramic molded body which has not yet been sintered. Note that a description will be made about a case where an inspection method by a surface defect inspection device 1 is applied to the ceramic sintered body 2 including the band-shaped portion 4, but this is not restrictive. The inspection method by the surface defect inspection device 1 may be applied to a ceramic sintered body which does not include the band-shaped portion 4. The ceramic sintered body which does not include the band-shaped portion 4 is produced in a case where the ceramic molded body is fabricated using the metal die molding and where sufficient polishing (including a process for removing the band-shaped portion) is applied before sintering or where a ceramic molded body is fabricated using rolling granulation.

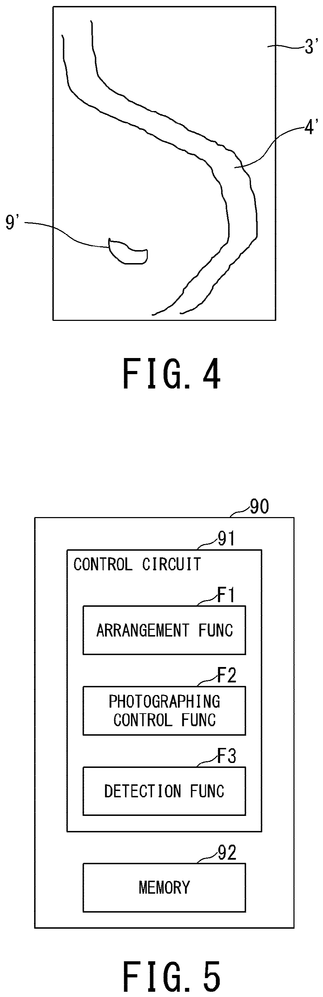

The surface defect inspection device 1 includes the arrangement member 5 on which the ceramic sintered body 2 including the spherical surface portion 3 is arranged. Further, the arrangement member 5 has a plurality of spherical members 5A. In the surface defect inspection method, the surface defect inspection device 1, for example, an arrangement function F1 (illustrated in FIG. 5), performs an arrangement step of arranging the ceramic sintered body 2 including the spherical surface portion 3 on the arrangement member 5 which has the plurality of spherical members 5A. For example, the surface defect inspection device 1 can suck and transport the ceramic sintered body 2 and can place the ceramic sintered body 2 on the arrangement member 5. Alternatively, for example, the surface defect inspection device 1 can control a robotic arm to transport the ceramic sintered body 2 and can thereby place the ceramic sintered body 2 on the arrangement member 5. Further, a method is possible in which a worker places the ceramic sintered body 2 on the arrangement member 5. Note that mechanization can be achieved by using suction or the robotic arm.

Further, it is preferable that three or more spherical members 5A be used for the arrangement member 5. When three or more spherical members 5A are provided, the ceramic sintered body 2 including the spherical surface portion 3 can stably be arranged. Further, when four or more spherical members 5A are provided, it becomes easy to change an orientation of the ceramic sintered body 2 including the spherical surface portion 3 by rotation of the spherical members 5A. Further, it is preferable that the plurality of spherical members 5A be evenly arranged. Even arrangement means that when three spherical members 5A are provided, arrangement is performed such that a shape formed by centers of the spherical members 5A becomes an equilateral triangle and that when four spherical members 5A are provided, arrangement is performed such that the shape formed by the centers of the spherical members 5A becomes a square. When even arrangement is performed, it becomes possible to achieve both of stable arrangement of the ceramic sintered body 2 including the spherical surface portion 3 and easiness of orientation change. Further, an upper limit of the number of spherical members 5A used for the arrangement member 5 is not particularly limited, but it is preferable that the number be equal to or less than 10. When the number of spherical members 5A is large, no additional effect can be obtained, and there is a possibility that even arrangement conversely becomes difficult.

Further, it is preferable that each of the plurality of spherical members 5A used for the arrangement member 5 be a ceramic ball. It is also possible to use resin balls or metal balls for the plurality of spherical members 5A used for the arrangement member 5. On the other hand, deformation due to heat and degradation due to wear are likely to occur in the resin ball and the metal ball. However, the ceramic ball is a material which are resistant to heat and wear. By using the ceramic ball for each of the plurality of spherical members 5A used for the arrangement member 5, it becomes possible to prevent an occurrence of positional displacement of the ceramic sintered body 2 including the spherical surface portion 3. Further, because the plurality of spherical members 5A formed with ceramic balls have moderate frictional resistance with a surface of the ceramic sintered body 2 including the spherical surface portion 3, it is easy to change the orientation of the ceramic sintered body 2 including the spherical surface portion 3. In other words, the ceramic sintered body 2 including the spherical surface portion 3 can be inhibited from idly rotating.

Further, a material of the table 6 may be a metal, a ceramic, a resin, or the like. The resins include rubber. It is preferable that as the material of the table 6, a material which has moderate frictional resistance with the arrangement member 5 be used. This is because it is necessary to rotate the spherical members 5A instead of sliding the spherical members 5A in accordance with a slide of the table 6. Further, coating may be applied to the table 6 as needed. Further, the arrangement member 5 may be provided with a holding member, which is not illustrated, and positional displacement may thereby be prevented. The holding member does not interfere with contact between the table 6 and the arrangement member 5 or contact between the arrangement member 5 and the ceramic sintered body 2. Further, a plurality of arrangement members 5 may be arranged on the table 6. By providing photographing units 7 corresponding to the number of plurality of arrangement members 5, an inspection about a plurality of ceramic sintered bodies 2 can be performed at once.

Next, the surface defect inspection device 1, for example, a photographing control function F2 (illustrated in FIG. 5), performs a photographing control step in which the ceramic sintered body 2 arranged on the arrangement member 5 is rotated in response to rotation of the plurality of spherical members 5A, the ceramic sintered body 2 arranged on the arrangement member 5 is thereby photographed from a plurality of directions, and a plurality of images are acquired. The surface defect inspection device 1 controls the slide of the table 6, thereby controls the rotation of the plurality of spherical members 5A, and can thereby control the rotation of the ceramic sintered body 2. The surface defect inspection device 1 controls the photographing unit 7 so as to perform photographing at a timing when the ceramic sintered body 2 is stopped. As the photographing unit 7, a line sensor camera, an area sensor camera, or the like can be used. In the following, the line sensor camera might simply be referred to as a line sensor. Similarly, the area sensor camera might simply be referred to as an area sensor.

The line sensor can perform photographing of one row at once by a pixel group which is one-dimensionally arranged. The area sensor can perform photographing of a wide area at once by a pixel group which is two-dimensionally arranged. In other words, the line sensor is a camera which photographs a target object in a line. Further, the area sensor is a camera which photographs the target object in a plane. It is preferable that as the photographing unit 7, the line sensor be used. The ceramic sintered body 2 including the spherical surface portion 3 is a spherical body. When defects on the whole surface of the ceramic sintered body 2 including the spherical surface portion 3 are inspected, it is necessary to change the orientation of the ceramic sintered body 2 including the spherical surface portion 3. A plurality of images, which are obtained by performing photographing a plurality of times while changing the orientation, are connected, and presence or absence of the defect in the ceramic sintered body 2 is determined. It is easy to perform a connecting process for images obtained by the line sensor.

Further, it is also possible to at once observe a whole hemisphere of the ceramic sintered body 2 including the spherical surface portion 3 by using the area sensor. On the other hand, the area sensor which can observe a wide range and has a large number of pixels is expensive. Because the line sensor has a narrow observation region, the line sensor can achieve high resolution even with a small number of pixels. Also for this reason, it is preferable to use the line sensor.

Further, as the line sensor, there is a line sensor with a scan speed of 30 MHz or higher. As for the area sensor, the scan speed is approximately 5 to 20 MHz. As described above, when the line sensor is employed, the scan speed is faster, and inspection efficiency is higher. Also for this reason, it is preferable to use the line sensor. By using the line sensor with a scan speed of 30 MHz or higher as the photographing unit 7, an inspection time for one ceramic sintered body 2 including the spherical surface portion 3 can be set to 2 seconds or shorter. In the following, a description will be made about, as an example, a case where the photographing unit 7 is the line sensor.

Further, it is preferable to arrange the line sensor 7 above the ceramic sintered body 2 including the spherical surface portion 3. An installation direction of the line sensor 7 is not particularly limited, but the above arrangement is preferable because when the ceramic sintered body 2 is photographed from above, the arrangement member 5 can be prevented from entering the images.

The surface defect inspection device 1 rotates the plurality of spherical members 5A of the arrangement member 5, changes the orientation of the ceramic sintered body 2 including the spherical surface portion 3, and thereby photographs the ceramic sintered body 2 from another direction. FIG. 2 illustrates an example of a mechanism which moves the table 6. The reference numerals in FIG. 2 are the same as those in FIG. 1. The arrangement member 5 having the plurality of spherical members 5A is provided on the table 6.

By sliding the table 6 in a certain direction, for example, in a negative direction of the X axis (which may also be a positive direction of the X-axis or the Y-axis direction), the plurality of spherical members 5A are rotated in a direction R1 by an amount of slide. Then, by rotating the ceramic sintered body 2 in a direction R2 around a central axis V (a parallel axis to the Y axis) as a center in response to the rotation of the plurality of spherical members 5A in the direction R1, the orientation of the ceramic sintered body 2 can be changed. By using the plurality of spherical members 5A for the arrangement member 5, the orientation of the ceramic sintered body 2 including the spherical surface portion 3 can be changed without changing a position in a height direction. Thus, by photographing the ceramic sintered body 2 from a plurality of directions, a plurality of images from different photographing directions can be obtained. Further, the plurality of images can be obtained without changing a position of the line sensor 7.

Next, the surface defect inspection device 1, for example, a detection function F3 (illustrated in FIG. 5), performs a detection step of detecting a surface defect of the ceramic sintered body 2 including the spherical surface portion 3 from the plurality of images acquired by the photographing control step. It is preferable that the plurality of images acquired by performing photographing from a plurality of directions include the whole surface of the ceramic sintered body 2 including the spherical surface portion 3 in the circumferential direction. For example, it is preferable that the plurality of images acquired by performing photographing from the plurality of directions be three or more images acquired by performing photographing from three or more directions.

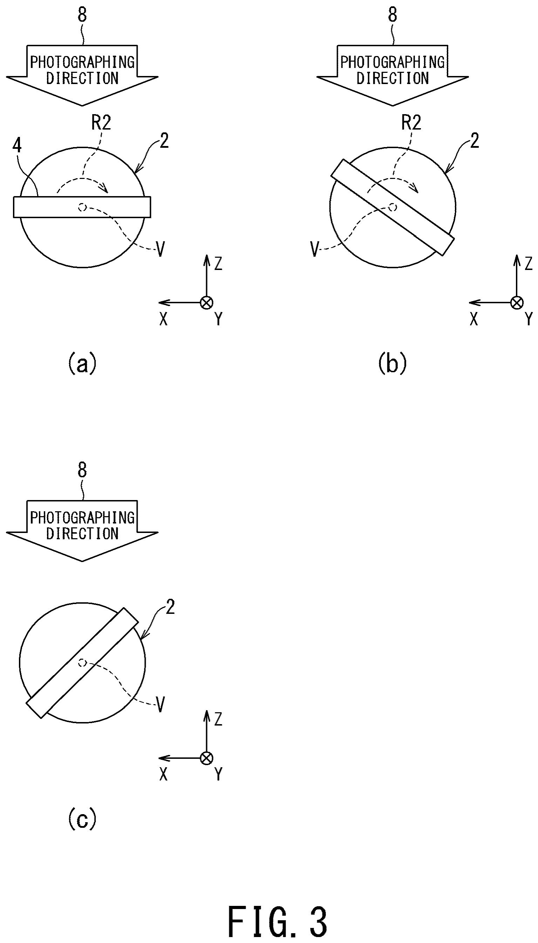

FIG. 3 illustrates examples of the photographing directions of the ceramic sintered body 2. In FIG. 3, a reference numeral 8 indicates a photographing direction from the photographing unit such as the line sensor 7. FIG. 3 illustrates, as an example, a situation where the ceramic sintered body 2 including the spherical surface portion 3 is photographed from above by using the line sensor 7. In FIG. 3, a photographing direction 8 from the line sensor 7 is set to a direction from a position above the ceramic sintered body 2 including the spherical surface portion 3.

An obtained image in division (a) of FIG. 3 is set as an image (a), an obtained image in division (b) of FIG. 3 is set as an image (b), and an obtained image in division (c) of FIG. 3 is set as an image (c). The images (a) to (c) are obtained by performing photographing three times when photographing of the ceramic sintered body 2 from the photographing direction 8 (a parallel direction to the Z axis) by the line sensor 7 and rotation of the ceramic sintered body 2 are alternately performed. As for the image (a), it is difficult to obtain an image of a lower side from the band-shaped portion 4 of the ceramic sintered body 2 with respect to the line sensor 7 side. Accordingly, the ceramic sintered body 2 is rotated in direction R2 around the central axis V (the parallel axis to the Y axis) as the center, the orientation of the ceramic sintered body 2 is thereby changed, and second photographing is performed (image (b)). In addition, the ceramic sintered body 2 is rotated in the direction R2 around the central axis V as the center, the orientation of the ceramic sintered body 2 is thereby changed, and third photographing is performed (image (c)). The plurality of images (for example, the three images (a) to (c)) are acquired, and connection of the plurality of images is performed, and a connected image (shown in FIG. 4) depicting the whole surface of the ceramic sintered body 2 can thereby be obtained.

FIG. 3 illustrates, as an example, a case where the table 6 (illustrated in FIG. 1 and FIG. 2) is slid in the negative direction of the X axis, the orientation of the ceramic sintered body 2 is thereby changed in the direction R2 by 60° around the central axis V, which is the parallel axis to the Y axis, as the center, and three images are obtained. First photographing is performed in the orientation in division (a) of FIG. 3, and the ceramic sintered body 2 is rotated by 60° in the direction R2 around the central axis V as the center and is then stopped (transitioning to a state in division (b) of FIG. 3). The second photographing is performed in a state in division (b) of FIG. 3, and the ceramic sintered body 2 is further rotated by 60° in the direction R2 around the central axis V as the center and is then stopped (transitioning to a state in division (c) of FIG. 3). The third photographing is performed in a state in division (c) of FIG. 3. In such a manner, photographing is performed three times while the ceramic sintered body 2 is rotated once, and the whole surface of the ceramic sintered body 2 including the spherical surface portion 3 is thereby photographed. When photographing is performed while the orientation is changed by 60°, three images which are photographed from three directions are obtained. Then, the three images corresponding to the three directions (images (a), (b), and (c)) are obtained.

In FIG. 3, the ceramic sintered body 2 is photographed from three directions, but the ceramic sintered body 2 may also be photographed from four or more directions. For example, because there can be a case where the defect is present at a boundary between images from neighboring directions, the photographing directions may be adjusted such that neighboring images partially overlap. Thus, images acquired by performing photographing from four or more directions may also be used. Further, for example, when the photographing direction is shifted by 60°, three images correspond to one full rotation. Further, images obtained by performing photographing for two or more rotations may also be used. A method is effective in which photographing is performed while the orientation is shifted in the X-axis direction or Y-axis direction. Note that an upper limit of the number of photographing directions, in other words, an upper limit of the number of images is not particularly limited, but it is preferable that 90 or less images be obtained. When the number of images is large exceeding 90, there is a possibility that the photographing control step becomes complicated. Thus, it is preferable that the number of images for one rotation be in a range of 3 or more to 90 or less and further be in a range of 3 or more to 10 or less. When the number of images is 10 or less, an inspection time can be shortened. Further, as needed, the plurality of images acquired from the plurality of photographing directions may sequentially be connected.

Further, when the ceramic sintered body 2 including the spherical surface portion 3 has the band-shaped portion 4, the band-shaped portion 4 is easily used as a marker when the plurality of images are connected.

FIG. 4 shows an example of the connected image formed with the plurality of images. In FIG. 4, a reference numeral 3' denotes a form of the spherical surface portion 3, a reference numeral 4' denotes a form of the band-shaped portion 4, and a reference numeral 9' denotes a form of a recess portion. FIG. 4 shows an example of the connected image which is formed with the plurality of images acquired by photographing the spherical surface portion 3 and the band-shaped portion 4. In FIG. 4, the connected image which is formed with the plurality of images acquired by performing photographing by using the line sensor is shown as a schematic diagram. When the plurality of images are connected, a curved surface of the ceramic sintered body 2 is converted to a flat surface. Contrast of the form 9' of the recess portion appears differently from those of the form 3' of the spherical surface portion and of the form 4' of the band-shaped portion. Contrast of protrusion portions and color unevenness, which are not illustrated, also appear differently. The defect may be a recess portion, a protrusion portion, or color unevenness. Contrast of all of those appear differently.

Further, it is preferable to perform photographing while a photographing surface of the ceramic sintered body 2 is illuminated. By shining light on the photographing surface of the ceramic sintered body 2, the contrast of the defect in the ceramic sintered body 2 can be caused to appear clearly.

The above surface defect inspection method can efficiently inspect the surface defect of the ceramic sintered body 2 including the spherical surface portion 3. The ceramic sintered body 2 including the spherical surface portion 3 can be applied to various sizes such as diameters of 1 mm or longer to 70 mm or shorter. Further, by changing a size of the spherical member 5A used for the arrangement member 5, measurement is possible even when the ceramic sintered bodies 2 including the spherical surface portion 3 are changed. Further, even when the ceramic sintered body 2 including the spherical surface portion 3 has the band-shaped portion 4, observation of the defect is possible.

Further, the band-shaped portion 4 is continuous in the circumferential direction. Thus, it is possible to distinguish the band-shaped portion 4 from the protrusion portion which is the defect. Further, as needed, it is also possible to use images of limit samples that indicate good products or defective products. It is possible to adjust a defect size to be detected in accordance with the images of the limit samples. By the surface defect inspection method according to the embodiment, in the ceramic sintered body 2, a defect with a defect size of 1 mm or smaller and further a defect size of 0.5 mm or smaller can be detected. Note that a lower limit of the defect size is not particularly limited, but a defect size of 0.1 mm or larger is preferable. For example, in a case of the raw ball having the band-shaped portion 4, the finishing process is applied. It is highly possible that small defects of less than 0.1 mm are removed during the finishing process. In other words, in a case of the raw ball, it is sufficient that a defect of 0.1 mm or larger can be detected.

Further, after the inspection according to the embodiment, a fluorescent flaw detection inspection may be performed as needed. The fluorescent flaw detection inspection is a method for inspecting small defects of less than several tens micrometers. By the inspection according to the embodiment, products in which a defect of 0.1 mm or larger is present can be removed. Accordingly, efficiency of the fluorescent flaw detection inspection can be improved. The fluorescent flaw detection inspection is an inspection method that uses a fluorescent substance liquid. Because the used fluorescent substance liquid becomes a waste liquid, trouble with a waste liquid treatment can be decreased by reduction in an amount of the fluorescent substance liquid used at once and in the number of inspections.

Further, the surface defect inspection device 1 includes components (not illustrated) which surround the plurality of spherical members 5A of the arrangement member 5, wiring that connects the photographing unit 7 and the surface defect inspection device 1, a PC (personal computer) that incorporates images, and so forth. Further, a step of arranging the ceramic sintered body 2 including the spherical surface portion 3 on the arrangement member 5 may be mechanized.

Further, by placing a large number of arrangement members 5 on the table 6 and increasing the number of photographing units 7, an inspection of a large number of ceramic sintered bodies 2 may be performed at once.

Note that because the band-shaped portion 4 is regularly present throughout a circumference, the band-shaped portion 4 can be distinguished from the protrusion portion as the defect. As needed, collation with the image of the limit sample may be performed. Further, a determination about presence or absence of the defect is not limited to visual observation of the image but may also be performed by an automatic determination by using machine learning or AI (artificial intelligence) using the image.

As the machine learning, deep learning using a multilayer neural network such as a CNN (convolutional neural network) or a CDBN (convolutional deep belief network) is used. In an inspection step, a trained model is constructed using combinations of the images (including the connected images) and the good products or defective products, the image of the ceramic sintered body 2 as a target of this inspection is input to the trained model, and which of the good product and defective product the ceramic sintered body 2 corresponds to can thereby be output.

Further, to the ceramic sintered body 2 including the spherical surface portion 3, various materials such as a silicon nitride sintered body, an aluminum oxide sintered body, and a zirconium oxide sintered body can be applied. Types of ceramic sintered bodies are categorized based on a component that is most abundantly contained. The ceramic sintered body which most abundantly contains silicon nitride is categorized as the silicon nitride sintered body. Further, the silicon nitride sintered body also includes sialon sintered bodies.

Some silicon nitride sintered bodies have high strength, with a three-point bending strength of 800 MPa or higher and a fracture toughness of 5.5 MPa·m^{1/2} or higher. The aluminum oxide sintered body has a three-point bending strength of approximately 350 to 500 MPa. Further, some zirconium oxide sintered bodies have high strength, with a three-point bending strength of 800 MPa or higher and a fracture toughness of 5.5 MPa.m^{1/2} or higher.

Some silicon nitride sintered bodies and some zirconium oxide sintered bodies have high strength. On the other hand, in a case of the same size, the silicon nitride sintered body is lighter. This is because the silicon nitride sintered body has silicon and nitrogen as its main components but zirconium oxide has zirconium as its main component.

The silicon nitride sintered body is a difficult-to-machine material with a Vickers hardness HV of 1,400 or higher. When defects are present on a surface of the raw ball, the defects can cause defectiveness during the finishing process. Further, when defects are present on the surface of the ceramic ball for which the finishing process has been performed, the defects influence durability. Detecting the surface defect at a stage of the raw ball leads to improvements in a yield rate and reliability of the ceramic ball. In particular, the ceramic sintered body is effective which includes the spherical surface portion formed with the silicon nitride sintered body as a difficult-to-machine material.

As described above, by the surface defect inspection method according to the embodiment, the ceramic sintered body 2 including the spherical surface portion 3 can efficiently be inspected. An inspection speed can be set to two seconds per piece or shorter. Further, it is also possible to detect the defects due to the recess portion, the protrusion portion, and color unevenness. In particular, it is possible to detect a small defect of 1 mm or smaller and further of 0.5 mm or smaller. In particular, even when the band-shaped portion 4 is provided, the inspection efficiency can be improved. Further, the finishing process is performed for the raw ball which is determined to be the good product by the inspection, and the yield rate of the ceramic balls can thereby be improved.

Further, the surface defect inspection method can be applied to both of the raw ball and the ceramic ball for which the finishing process has been performed and is a highly versatile inspection method. Further, the ceramic ball can also be used for a bearing ball, a medium, and so forth. The medium denotes a crushing medium used in a ball mill or the like.

### (Examples)

### (Examples 1 to 7)

Ceramic sintered bodies including a spherical surface portion, which were formed with a silicon nitride sintered body, were prepared. All of those were ceramic sintered bodies having a band-shaped portion in a circumferential direction of the spherical surface portion and were raw balls for which the finishing process had not yet been performed. The prepared ceramic sintered bodies respectively had sizes indicated in Table 1. The sizes in Table 1 are the sizes resulting from the finishing process.

**[Table 1]**

| Type of Raw Ball | Raw Ball Size (inch) |
|---|---|
| Raw Ball 1 | 3/8 |
| Raw Ball 2 | 1-3/16 |
| Raw Ball 3 | 1-7/8 |

A raw ball size of 3/8 inches is for making a bearing ball with a diameter of 9.525 mm. Further, raw ball sizes of 1/16 to 3/16 inches are for making a bearing ball with a diameter of 30.16 mm. Further, raw ball sizes of 1/8 to 7/8 inches are for making a bearing ball with a diameter of 47.62 mm.

Next, a step of arranging the ceramic sintered body including the spherical surface portion on an arrangement member having a plurality of spherical members was performed. A ceramic ball was used as the spherical member. The numbers of spherical members were set to the numbers indicated in Table 2.

**[Table 2]**

| | Type of Raw Ball | The Numbers of Spherical Members |
|---|---|---|
| Example 1 | Raw Ball 1 | 3 |
| Example 2 | Raw Ball 1 | 4 |
| Example 3 | Raw Ball 1 | 6 |
| Example 4 | Raw Ball 2 | 4 |
| Example 5 | Raw Ball 2 | 6 |
| Example 6 | Raw Ball 3 | 4 |
| Example 7 | Raw Ball 3 | 6 |

Next, by using a line sensor camera or an area sensor camera, whether defects were present or absent on a whole surface of the raw ball was checked. Inspection conditions are as indicated in Table 3. Note that a step of changing an orientation of the raw ball was performed by sliding the table 6, on which the arrangement member 5 having the plurality of spherical members 5A were placed, in the negative direction of the X axis (which may also be the positive direction of the X-axis or the Y-axis direction). Further, the number of photographing directions, in other words, the number of images is the number of images which were used to depict the whole surface of the raw ball.

**[Table 3]**

| | Camera | | The Number of Images | Presence or Absence of Illumination |
|---|---|---|---|---|
| | Type of Sensor | Scan Speed [MHz] | | |
| Example 1 | Line Sensor | 30 | 3 | Presence |
| Example 2 | Line Sensor | 50 | 4 | Absence |
| Example 3 | Area Sensor | 10 | 3 | Presence |
| Example 4 | Line Sensor | 60 | 3 | Presence |
| Example 5 | Line Sensor | 80 | 4 | Presence |
| Example 6 | Line Sensor | 40 | 3 | Presence |
| Example 7 | Line Sensor | 60 | 6 | Presence |

A time taken to inspect one raw ball by an inspection method according to each of the examples 1 to 7 was measured. Further, as examples of defective products, the raw balls having at least one defect of the recess portion and protrusion portion of 0.3 mm or 1 mm and color unevenness were prepared. By aligning 990 raw balls as good products and 10 raw balls as defective products in random order, an inspection of a total of 1,000 raw ball was performed. Further, an inspection of 1,000 raw balls including defective products with a defect size of 0.3 mm was performed, an inspection of 1,000 raw balls including defective products with a defect size of 1 mm was performed, and whether or not 10 defective products could be detected was checked for each of the defect sizes. Detection of the good products or defective products based on images was performed by using machine learning by a trained model constructed with combinations of the images and the good products or defective products. The results are indicated in Table 4.

**[Table 4]**

| | Inspection Time | Detection of 10 Defective Products | |
|---|---|---|---|
| | | Defect Size of 0.3 mm | Defect Size of 1 mm |
| Example 1 | 1 Second Per Piece or Shorter | All Detected | All Detected |
| Example 2 | 1 Second Per Piece or Shorter | 9 Detected 1 Non-Detected | All Detected |
| Example 3 | 30 Seconds Per Piece | All Detected | All Detected |
| Example 4 | 1 Second Per Piece or Shorter | All Detected | All Detected |
| Example 5 | 1 Second Per Piece or Shorter | All Detected | All Detected |
| Example 6 | 1 Second Per Piece or Shorter | All Detected | All Detected |
| Example 7 | 2 Seconds Per Piece or Shorter | All Detected | All Detected |

As it can be understood from Table 4, in the examples 1, 2, and 4 to 7 where the line sensor 7 was used, the inspection time was as short as two seconds per piece or shorter. Further, as in the examples 1, 2, and 4 to 6, by setting the number of photographing directions, that is, the number of images to five or less, the inspection time could be shortened to one second per piece or shorter.

Further, even in the example 2 where a photographing surface of the raw ball was not irradiated with illumination, the defect of 1 mm could be detected. However, 9 defective products with a defect of 0.3 mm could be detected, 1 defective product could not be detected. Thus, it was found that photographing was performed better while the photographing surface of the raw ball was irradiated with illumination.

Further, because even when the raw ball sizes were changed from the raw balls 1 to 3, the defective products could be detected, it can be understood that a method using the surface defect inspection device 1 is a highly versatile surface defect inspection method. A ceramic ball was fabricated that was obtained by applying the finishing process to the raw ball (the ceramic sintered body 2 including the band-shaped portion 4 in the circumferential direction of the spherical surface portion 3) which was determined to be the good product by the surface defect inspection method of the examples 1 to 7. This ceramic ball could be used as a bearing ball.

In a method of performing video recording of a ball which was rolled as in Patent Document 1, detection precision about the defects lowered. In a case where video was used, it was difficult to detect a small defect of approximately 0.3 mm. Further, in a method of rolling a ball on a rail, it is difficult to stably transport the ceramic sintered body including the band-shaped portion in the circumferential direction of the spherical surface portion. Further, in a method of performing an inspection in a liquid as in Patent Document 2, the inspection time was several minutes because a time in which a fluctuation of the liquid was settled was needed.

Note that the above-described arrangement step, photographing control step, and detection step are realized by control by a computer (a surface defect inspection device 90 illustrated in FIG. 5). The surface defect inspection device 90 includes at least a control circuit 91 and a memory 92. The control circuit 91 reads and executes a computer program stored in the memory 92 or in a memory in the control circuit 91, and the surface defect inspection device 90 thereby realizes the arrangement function F1, the photographing control function F2, and the detection function F3.

The control circuit 91 controls an overall action of the surface defect inspection device 90. The control circuit 91 means a dedicated or general-purpose CPU (central processing unit), an MPU (microprocessor unit), or a GPU (graphics processing unit), as well as an ASIC (application specific integrated circuit), a programmable logic device, or the like. Examples of the programmable logic device may include a simple programmable logic device (SPLD), a complex programmable logic device (CPLD), a field programmable gate array (FPGA), and so forth.

Further, the control circuit 91 may be configured with a single circuit or may be configured with a combination of a plurality of independent control circuit elements. In the latter case, the memory 92 may be provided individually for each of the control circuit elements, or a single memory 92 may store programs corresponding to functions of the plurality of control circuit elements. Note that the control circuit 91 is an example of a control unit.

The memory 92 is configured with a semiconductor memory element such as a RAM (random-access memory) or a flash memory, a hard disk, an optical disk, or the like. The memory 92 may also be configured with a portable medium such as a USB (universal serial bus) memory or a DVD (digital video disk). The memory 92 stores various processing programs (including application programs, an OS (operating system), and so forth) to be used in the control circuit 91 and data necessary for execution of the programs. Further, the OS may include a GUI (graphic user interface) which uses a lot of graphics for displaying information on a display unit for an operator and through which basic operations can be performed by an input unit.

The arrangement function F1 is a function of arranging the ceramic sintered body 2 on the arrangement member 5 having the plurality of spherical members 5A. The photographing control function F2 is a function of rotating the ceramic sintered body 2 arranged on the arrangement member 5 in response to the rotation of the plurality of spherical members 5A, thereby photographing the ceramic sintered body 2, which is arranged on the arrangement member 5, from the plurality of directions, and thereby acquiring the plurality of images. The detection function F3 is a function of detecting the surface defect of the ceramic sintered body 2 based on the plurality of images acquired by the photographing control function F2.

Note that although a description is made by raising, as an example, a case where the functions F1 to F3 are realized by a computer program, all or part of the functions F1 to F3 may also be provided as functions of circuits such as ASICs (application specific integrated circuits) in the surface defect inspection device 90. The arrangement function F1 is an example of an arrangement unit. The photographing control function F2 is an example of a photographing control unit. The detection function F3 is an example of a detection unit. Further, not only the arrangement step, the photographing control step, and the detection step, but also all or part of steps such as a molding step, a degreasing step, a sintering step, a HIP (hot isostatic pressing) step, and a polishing step may also be realized by control by a computer. The polishing step is a step of manufacturing the ceramic ball by applying the polishing process to the ceramic sintered body, which is determined to be the good product among a plurality of ceramic sintered bodies by the detection step, and is also referred to as the finishing process.

According to at least one embodiment described above, it is possible to improve inspection precision (detection precision about the good products and defective products) about the ceramic sintered body 2 having the spherical surface portion 3.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A surface defect inspection method for a ceramic sintered body including a spherical surface portion, the method comprising:
an arrangement step of arranging the ceramic sintered body on an arrangement member having a plurality of spherical members;
a photographing control step of rotating the ceramic sintered body arranged on the arrangement member in response to rotation of the plurality of spherical members, photographing the ceramic sintered body, which is arranged on the arrangement member, from a plurality of directions, and acquiring a plurality of images; and
a detection step of detecting a surface defect of the ceramic sintered body based on the plurality of images.

2. The surface defect inspection method according to claim 1, wherein in the photographing control step, the ceramic sintered body is photographed by controlling a line sensor camera.

3. The surface defect inspection method according to claim 1 or 2, wherein the plurality of images are images of a whole surface of the ceramic sintered body in a circumferential direction.

4. The surface defect inspection method according to claim 1 or 2, wherein the plurality of images are three or more images that are obtained by photographing the ceramic sintered body, which is arranged on the arrangement member, from three or more directions.

5. The surface defect inspection method according to claim 3, wherein the plurality of images are three or more images that are obtained by photographing the ceramic sintered body, which is arranged on the arrangement member, from three or more directions.

6. The surface defect inspection method according to claim 1 or 2, wherein in the photographing control step, photographing is performed while a photographing surface of the ceramic sintered body is illuminated.

7. The surface defect inspection method according to claim 3, wherein in the photographing control step, photographing is performed while a photographing surface of the ceramic sintered body is illuminated.

8. The surface defect inspection method according to claim 1 or 2, wherein each of the plurality of spherical members is a ceramic ball.

9. The surface defect inspection method according to claim 1 or 2, wherein in the photographing control step, by arranging the plurality of spherical members on a table and by sliding the table, the ceramic sintered body arranged on the plurality of spherical members is rotated.

10. The surface defect inspection method according to claim 8, wherein in the photographing control step, by arranging the plurality of spherical members on a table and by sliding the table, the ceramic sintered body arranged on the plurality of spherical members is rotated.

11. The surface defect inspection method according to claim 1 or 2, wherein the ceramic sintered body is a ceramic ball having a band-shaped portion.

12. The surface defect inspection method according to claim 3, wherein the ceramic sintered body is a ceramic ball having a band-shaped portion.

13. The surface defect inspection method according to claim 7, wherein the ceramic sintered body is a ceramic ball having a band-shaped portion.

14. A method of manufacturing a ceramic ball, the method comprising a step of applying a polishing process to a ceramic sintered body, which is determined to be a good product among a plurality of ceramic sintered bodies by the detection step of the surface defect inspection method according to claim 1.

15. A method of manufacturing a ceramic ball, the method comprising:
the surface defect inspection method according to claim 11; and
a step of applying a polishing process to a ceramic sintered body, which is determined to be a good product among a plurality of ceramic sintered bodies by the detection step of the surface defect inspection method.

16. A method of manufacturing a ceramic ball, the method comprising:
the surface defect inspection method according to claim 12; and
a step of applying a polishing process to a ceramic sintered body, which is determined to be a good product among a plurality of ceramic sintered bodies by the detection step of the surface defect inspection method.

17. A method of manufacturing a ceramic ball, the method comprising:
the surface defect inspection method according to claim 13; and
a step of applying a polishing process to a ceramic sintered body, which is determined to be a good product among a plurality of ceramic sintered bodies by the detection step of the surface defect inspection method.

18. The method of manufacturing a ceramic ball according to claim 14, wherein the ceramic ball is formed with a silicon nitride sintered body.

19. The method of manufacturing a ceramic ball according to claim 15, wherein the ceramic ball is formed with a silicon nitride sintered body.

20. The method of manufacturing a ceramic ball according to claim 16, wherein the ceramic ball is formed with a silicon nitride sintered body.

21. A surface defect inspection device for a ceramic sintered body including a spherical surface portion, the device comprising:
an arrangement unit that arranges the ceramic sintered body on an arrangement member having a plurality of spherical members;
a photographing control unit that rotates the ceramic sintered body arranged on the arrangement member in response to rotation of the plurality of spherical members, photographs the ceramic sintered body, which is arranged on the arrangement member, from a plurality of directions, and acquires a plurality of images; and
a detection unit that detects a surface defect of the ceramic sintered body based on the plurality of images.
